# EUROPEAN PATENT APPLICATION

(11) **EP 2 521 246 A1**
(43) Date of publication of application: **07.11.2012**
(21) Application number: 11164591.7
(22) Date of filing: 03.05.2011
(51) Int. Cl.: H02K 1/20, H02K 9/19

(54) **Stator arrangement**

(71) Applicant: Siemens Aktiengesellschaft, 80333 München (DE)
(72) Inventor: Le Besnerais, Jean, 59370 Mons en Baroeul (FR)

(57) **Abstract**

Stator arrangement (2) for an electrical machine (1), having a stator (3) with a stator stack (4) comprising a number of adjacently disposed metal plates (5) and a cooling means in the shape of at least one cooling pipe (7) extending through respective bores (8) within the stator stack (4), whereby the bores (8) are located in one single row having a defined radial position (R) with respect to the centre axis (13) of the stator (3).

## Description

The invention refers to a stator arrangement for an electrical machine, having a stator with a stator stack comprising a number of adjacently disposed metal plates and a cooling means in the shape of at least one cooling pipe extending through respective bores within the stator stack.

The operation of electrical machines such as generators or the like having a respective stator arrangement is accompanied by heat losses or copper losses respectively. In order to avoid thermal overheating which may lead to lowered efficiency or even to damage or a reduction of the lifetime, particularly the insulation lifetime of the electrical machine, usually cooling means are provided with the stator arrangement.

A known approach to provide a stator arrangement with proper cooling is the use of a liquid cooling medium such as water for instance circulating within respective cooling pipes. Thereby, the cooling pipes are usually located in respective bores in the stator stack. The respective cooling pipes are connected to cooling manifolds or so called direction changing devices at the face sides of the stator arrangement. Furthermore, respective cooling water inlets and cooling water outlets are provided on the respective face sides of the stator stack. The heated liquid cooling medium is passed to a heat exchanger in order to dissipate the excess heat.

However, the entire construction of a respective liquid cooled stator arrangement requires a comparatively large amount of space, particularly in radial direction.

It is the object of the invention to improve a respective stator arrangement in regard of a constructive compact design.

This is inventively achieved by a stator arrangement as has been initially described, characterised in that the bores are located in one single row having a defined radial position with respect to the centre axis of the stator.

The present invention is based on the idea to allow a more compact constructive design of a respective stator arrangement, particularly the stator stack, by providing the stator stack with only one single row of the respective bores. All respective bores are located at a defined radial position with respect to the centre axis of the stator, i.e. the respective bores are located along the circumference of a ring having a defined diameter at the face sides of the stator stack. In such a manner, the radial dimensions of the stator may be reduced. Particularly, the inventive principle avoids radially multi-layer arrangements of respective bores.

The number and axial relative distance of the respective bores mainly depends on the required amount of cooling of the respective electrical machine comprising the inventive stator arrangement and hence may vary for differently sized stator arrangements. The same applies to the diameter of the respective bores which also defines the diameter of the respective cooling pipes. The bores may have the same or different cross-sectional size and/or area.

In favour, the inlets and outlets of the cooling pipe axially project out of the stator stack in at least one cooling manifold. The cooling manifold serves as a junction of the respective cooling pipes bringing the inlets and outlets of the respective cooling pipes together. Due to the inventive principle of providing the respective bores in only one single row having a defined radial position with respect to the centre axis of the stator, the cooling manifold may also be constructed with comparatively reduced radial dimensions.

A respective cooling manifold is firmly attached to at least one, preferably both face sides of the stator stack.

The cooling manifold may have a ring-like shape with internal subdivided channel-like structures if need be. Alternatively, the cooling manifold may have a ring-segment-like shape, i.e. a number of respectively shaped cooling manifolds are attached around the circumference of the respective face sides of the stator stack.

Thereby, it is possible that the cooling manifolds at least partially overlap each other. Overlapping in terms of the present invention means that the respective cooling manifolds radially engage each other. Thereby, all cooling manifolds share the same axial position. Thus, the cooling manifolds are arranged or intermingled essentially in the same axial plane contributing to a more compact construction of the stator arrangement as a whole.

Since it is preferred that the cooling pipe is part of a closed cooling circle, the cooling manifolds are arranged in a respective manner to provide a continuous flow of the cooling medium through the respective cooling pipe(s) along and/or through the stator stack.

Thereby, the respective cooling pipe may have a meander-like shape, i.e. follows the course of a meander. In such a manner, the contact surface between the cooling pipe and the stator stack may be increased leading to improved thermal exchange and cooling properties respectively.

In order to further increase the cooling properties of the cooling pipe, it is of advantage when the cooling pipe is made of a thermally conductive material, particularly copper.

Additionally, copper shows a comparatively ductile material behaviour which is advisable regarding the aforementioned meander-like shape of the cooling pipe since even sharp bending radii may be realised. Of course, the respective cooling pipe may be built of other thermally conductive materials such as aluminium or highly graphite filled polymers for instance as well.

The outer perimeter of the cooling pipe may be at least partially provided with a layer of a thermally conductive material. Likewise, the cooling properties of the cooling means, i.e. the cooling pipe may be further increased since a thermal exchange of the contact area between the outer perimeter of the cooling pipe and the respective inner perimeter of the respective bore is promoted. Suitable thermally conductive materials may be thermally conductive pastes, gels, coatings or the like.

In a further embodiment of the invention, the cooling pipe is disposed in the back core of the stator stack. Hence, the cooling pipe has a radially inner or outer position in comparison to the stator windings in dependence of a configuration of the respective electrical machine comprising the inventive stator arrangement, i.e. if the respective electrical machine has an outer stator - inner rotor configuration or an outer rotor - inner stator configuration.

The invention also refers to an electric machine, particularly a generator for a direct drive wind turbine, comprising a stator arrangement as has been described before. The direct drive wind turbine may be used in offshore applications.

In the following, the invention is explained in detail as reference is made to the figures, whereby:
- fig. 1: shows a principle cut view of an electrical machine comprising an inventive stator arrangement according to an exemplary embodiment of the invention;
- fig. 2: shows a cross-sectional cut view of the electrical machine shown in fig. 1; and
- fig. 3: shows a top view of a portion of a stator arrangement according to an exemplary embodiment of the invention.

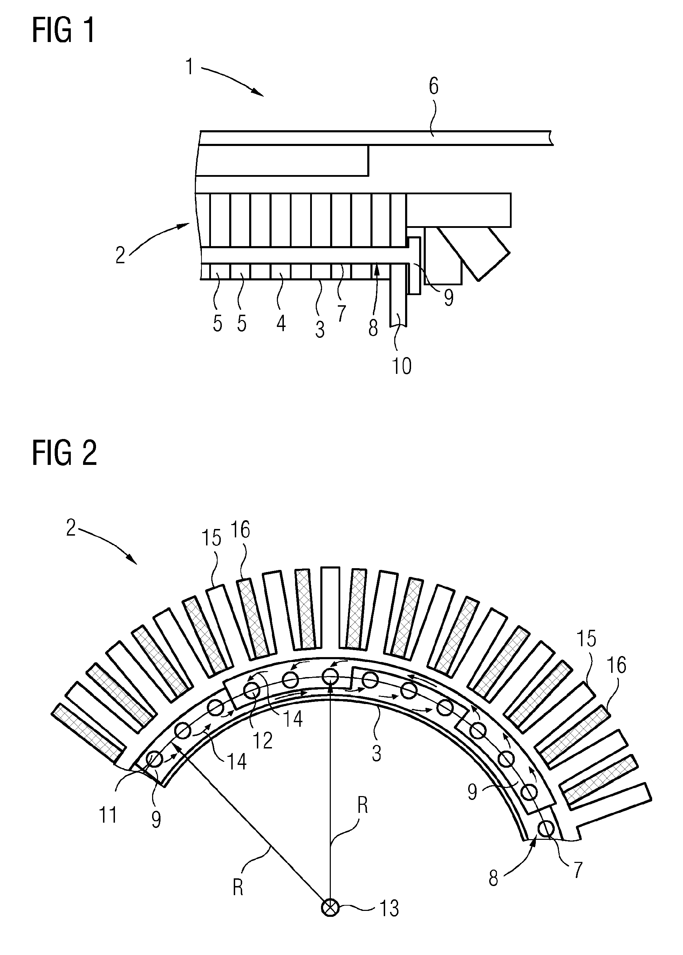

Fig. 1 shows a principle cut view of an electrical machine 1 comprising an inventive stator arrangement 2 according to an exemplary embodiment of the invention. The electrical machine 1 is a generator installed in a direct drive wind turbine (not shown) applicable in offshore environments.

The electrical machine 1 comprises the stator arrangement 2 having a stator 3 with a stator stack 4 comprising a number of adjacently disposed metal plates 5. The stator 3 is surrounded by a rotor 6 being rotatable relative to the stator 3 i.e. the electrical machine 1 has an outer rotor 6 - inner stator 3 configuration. Yet, the inventive principle is also suitable for respective electrical machines 1 having an outer stator 3 - inner rotor 6 configuration.

In order to encounter an undesired heating of the stator arrangement 2 and the electrical machine 1 respectively, the stator 3 comprises a cooling means in the shape of respective cooling pipes 7 extending through respective axial bores 8 within the stator stack 4. As is discernible, the bores 8 and accordingly the cooling pipes 7 are disposed in the back core of the stator stack 4.

The cooling pipes 7 are made of a thermally conductive material such as copper. Their respective outer perimeters are coated with a thermally conductive paste. The cooling pipes 7 are mechanically attached within the respective bores 8 by means of a press-fit or the like.

Cooling manifolds 9 are firmly attached (e.g. welded) to the respective end plates 10 disposed at the face sides of the stator stack 4. The cooling manifolds 9 bring respective inlets 11 and outlets 12 of the cooling pipes 7 axially projecting off the stator stack 4 together, i.e. intermingle respective inlets 11 and outlets 12 of the cooling pipes 7 in order to build a closed cooling circle within the stator stack 4. Of course, a leak-proof connection of the respective inlets 11 and outlets 12 respectively as well as the respective cooling manifolds 9 is provided. Therefore, respective sealing means such as O-rings made of rubber (not shown) are provided.

As is discernible from fig. 2, the bores 8 are located in one single row having a defined radial position R with respect to the centre axis 13 of the stator 3. In such a manner, the stator arrangement 2 has comparatively small radial dimensions supporting a compact constructive design of the stator arrangement 2 and the entire electrical machine 1. Hence, multi-layer arrangements of respective bores 8 and cooling pipes 7 having different radial positions in terms of respective different levels are overcome with the inventive principle.

As is further discernible from fig. 2, the cooling manifolds 9 each comprise the shape of a respective ring segment, whereby the cooling manifolds 9 partially overlap each other in circumferential direction, whereby the respective cooling means 9 share the same axial plane and at least partially engage each other in radial direction in alternating manner. As is discernible, corresponding step-like structures of the respective cooling manifolds 9 engage each other in radial direction.

That is, the respective cooling manifolds 9 may be partially placed on top of each other in the radial but not in the axial direction leading to a more compact constructive design of the stator arrangement 2 and the electrical machine 1 as whole. The flow of the liquid cooling medium (e.g. water) circulating within the cooling pipes 7 is indicated by the arrows 14.

In other embodiments of the invention, the respective cooling manifolds 9 may comprise a ring-like shape, i.e. one single cooling manifold 9 is attached to respective face side of the stator stack 4.

Fig. 2 also depicts the respective stator teeth 15 building slots for accommodating respective sets of stator windings 16, whereas fig. 1 merely depicts the respective end or overhang portions of the stator windings 16.

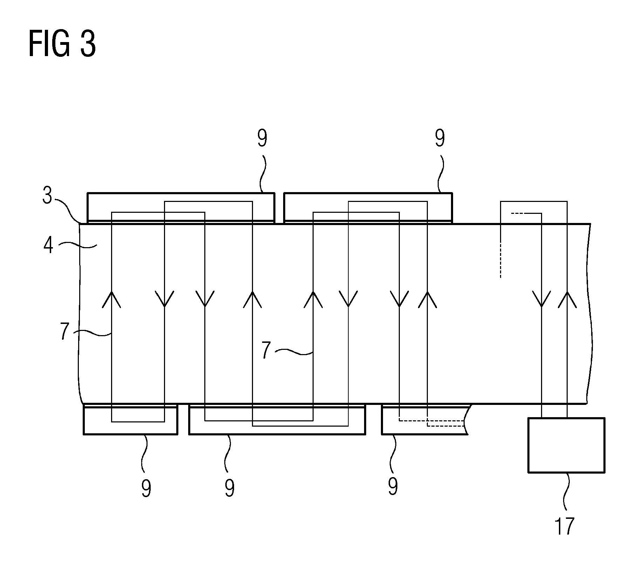

Fig. 3 shows a top view of a portion of a stator arrangement 2 according to an exemplary embodiment of the invention. As is discernible, the respective cooling pipes 7 build a closed cooling circle following a meander-like course within the stator 3. The respective distances between the parallelly aligned portions of the cooling pipes 7 may vary and are predominantly determined by the respective desired cooling capability.

The cooling pipes 7 may be integrally built or be combined by respective separate cooling pipe portions having a mechanically firm and leak-proof connection.

As is further discernible, the cooling pipe 7 is connected to a supply means 17 adapted to provide a supply of the respective liquid cooling medium circulating through the cooling pipes 7. The supply means 17 may comprise or be part of a heat exchanger (not shown).

The stator 3 may be segmented in respective stator segments (not shown) adapted to build the stator 2 when assembled.

## Claims

1. Stator arrangement (2) for an electrical machine (1), having a stator (3) with a stator stack (4) comprising a number of adjacently disposed metal plates (5) and a cooling means in the shape of at least one cooling pipe (7) extending through respective bores (8) within the stator stack (4), **characterised in that** the bores (8) are located in one single row having a defined radial position (R) with respect to the centre axis (13) of the stator (3).

2. Stator arrangement according to claim 1, wherein the inlet (11) and outlet (12) of the cooling pipe (7) axially project out of the stator stack (4) in at least one cooling manifold (9).

3. Stator arrangement according to claim 1 or 2, wherein the cooling manifolds (9) at least partially overlap each other.

4. Stator arrangement according to one of the preceding claims, wherein the cooling pipe (7) is made of a thermally conductive material, particularly copper.

5. Stator arrangement according to one of the preceding claims, wherein the outer perimeter of the cooling pipe (7) is at least partially provided with a layer of a thermally conductive material.

6. Stator arrangement according to one of the preceding claims, wherein the cooling pipe (7) is part of a closed cooling circle.

7. Stator arrangement according to one of the preceding claims, wherein the cooling pipe (7) has a meander-like shape.

8. Stator arrangement according to one of the preceding claims, wherein the cooling pipe (7) is disposed in the back core of the stator stack (4).

9. Electric machine (1), particularly a generator for a direct drive wind turbine, comprising a stator arrangement (2) according to one of the preceding claims.
